# EUROPÄISCHE PATENTANMELDUNG

(11) **EP 1 522 360 A1**
(43) Veröffentlichungstag der Anmeldung: **13.04.2005**
(21) Anmeldenummer: 04023750.5
(22) Anmeldetag: 06.10.2004
(51) Int. Cl.: B23B 29/20, B23Q 3/18

(54) **Justiervorrichtung für einen Werkzeughalter einer CNC - Drehmaschine**

(30) Priorität: 08.10.2003 AT 15842003
(71) Anmelder: W & H Dentalwerk Bürmoos GmbH, 5111 Bürmoos (AT)
(72) Erfinder: Schmiedlechner, Karl, 5121 Ostermiething (AT); Rudholzer, Andreas, 5151 Nussdorf (AT)

(57) **Zusammenfassung**

Die vorliegende Erfindung betrifft eine Justiervorrichtung (2) für einen Werkzeughalter (100) einer CNC - Drehmaschine zur exakten Ausrichtung des im Werkzeughalter (100) eingespannten Werkzeugs (109) auf das zu bearbeitende Werkstück (53). Um den Justiervorgang zu vereinfachen ist die Justiervorrichtung (2) mit eine Längsbohrung (4) versehen, in der eine Buchse (3) drehbar gelagert ist, wobei die Buchse (3) eine exzentrischer Bohrung (5) zur Aufnahme eines Justierstifts (52) der Revolverscheibe (50) der CNC - Drehmaschine aufweist.
Die Erfindung betrifft weiters einen Werkzeughalter (100) und eine Kupplungsvorrichtung (1) einer CNC - Drehmaschine mit einer derartigen Justiervorrichtung (2).

## Beschreibung

Die vorliegende Erfindung betrifft eine Justiervorrichtung für einen Werkzeughalter einer CNC - Drehmaschine zur exakten Ausrichtung des im Werkzeughalter eingespannten Werkzeugs auf das zu bearbeitende Werkstück.

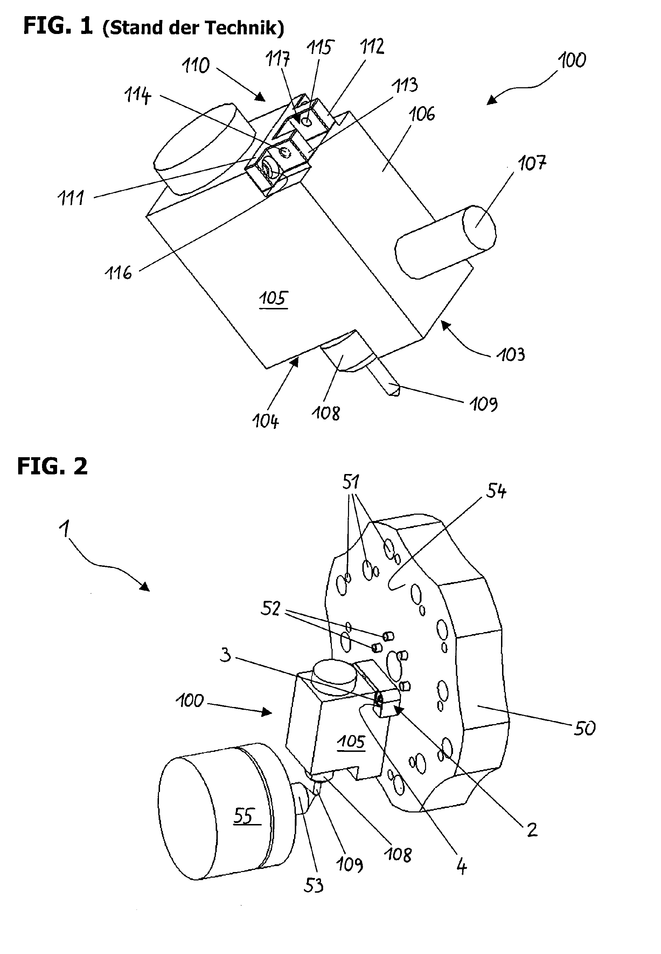

Ein Werkzeughalter mit einer derartigen Justiervorrichtung ist in Figur 1 (Stand der Technik) dargestellt. Der Werkzeughalter 100 besteht aus einem im wesentlichen rechteckigen Körper 105, an dessen Unterseite 103 in einem vertieften Abschnitt 104 eine Spannvorrichtung 108 zur Aufnahme eines Werkzeugs 109, zum Beispiel eines Bohrers oder Fräsers, angebracht ist. An der Rückseite 106 des Werkzeughalter-Körpers 105 befindet sich ein Bolzen 107 mit Rastvorrichtung, der zur Fixierung des Werkzeughalters 100 in einer der Bohrungen 51, die in Umfangsnähe der Revolverscheibe 50 eines Revolverkopfs angeordneten sind, gesteckt wird und dort einrastet (siehe Figur 2). Weiters ist an der Rückseite 106 eine Justiervorrichtung 110 angeordnet, die dazu dient, das Werkzeug 109 exakt auf das zu bearbeitende Werkstück 53, das in einer Werkstückaufnahme 55, zum Beispiel einer Drehspindel, eingespannt ist (siehe Figur 2), auszurichten. Die Justiervorrichtung 110 besteht aus einer Basisfläche 111 von der zwei voneinander beabstandete Justierblöcke 112, 113 senkrecht abstehen. In der Basisfläche 111 befinden sich zwei Bohrungen 116, die mit zwei Gewindebohrungen im Werkzeughalter-Körper 105 fluchten und über die die Justiervorrichtung 110 durch zwei Schrauben mit dem Werkzeughalter 100 verbunden ist. Wird der Werkzeughalter 100 an der Revolverscheibe 50 befestigt, so ragt einer der radial von der Stirnfläche 54 der Revolverscheibe 50 abstehenden Justierstifte 52 (siehe Figur 2) in den Zwischenraum 117 zwischen den beiden Justierblöcken 112, 113. Jeder der beiden Justierblöcke 112, 113 weist eine Querbohrung 114, 115 mit Innengewinde auf, durch die die Justierschrauben in den Zwischenraum 117 ragen. Zur Ausrichtung des Werkzeugs 109 auf das Werkstück 53 werden die beiden Justierschrauben bis zum Anschlag gegen den Justierstift 52 in den Zwischenraum 117 geschraubt, wobei durch unterschiedlich tiefes Eindrehen der Justierschrauben eine Drehung des gesamten Werkzeughalters 100 mit dem Werkzeug 109 um den als Drehachse dienenden Bolzen 107 erfolgt.

Nachteilig bei dieser Justiervorrichtung ist, daß die Justierschrauben bei an der Revolverscheibe fixiertem Werkzeughalter schwer zugänglich sind, wodurch eine exakte Justierung für den Bediener der Maschine sehr umständlich und zeitaufwendig ist. Es sei darauf verwiesen, daß insbesondere bei der bohrenden Bearbeitung kleiner Werkstücke äußerste Genauigkeit bei der Justierung notwendig ist, mit Abweichungen von weniger als 0,01 mm auf einer Länge von 30 mm. Die Bedienungsperson steht seitlich neben der CNC - Drehmaschine, so daß sie in etwa mit einem Blickwinkel wie er in Figur 2 dargestellt ist auf die Justiervorrichtung sieht. Die von der Bedienungsperson weiter entfernte, hintere Justierschraube ist daher nicht einzusehen und aufgrund der beengten Platzverhältnisse sind feine Veränderungen an der Schraube sehr schwer durchzuführen.

Der vorliegenden Erfindung liegt daher die Aufgabe zugrunde eine Justiervorrichtung eines Werkzeughalters einer CNC - Drehmaschine derart weiterzubilden, daß die Ausrichtung des Werkzeughalters und insbesondere sehr feine Veränderungen für die Bedienungsperson einfacher und mit weniger zeitlichem Aufwand durchzuführen sind.

Diese Aufgabe wird gemäß der vorliegenden Erfindung durch eine Justiervorrichtung mit den Merkmalen des Anspruchs 1, einen Werkzeughalter gemäß Anspruch 7 bzw. einer Kupplungsvorrichtung gemäß Anspruch 9 gelöst.

Die in einer Längsbohrung der erfindungsgemäßen Justiervorrichtung drehbar gelagerte Buchse weist eine exzentrische Bohrung auf, in welche bei der Montage des Werkzeughalters an den Revolverkopf ein Justierstift der Revolverscheibe eingreift. Durch Verdrehen der Buchse durch die Bedienungsperson folgt der Werkzeughalter mit dem eingespannten Instrument der Kreisbahn der Buchse, wodurch eine unkomplizierte Justierung des Instruments in Bezug auf das Werkstück möglich wird.

Um der Bedienungsperson das Verdrehen zu vereinfachen ist an der von der Revolverscheibe abgewandten Seite der Buchse eine Ansatzfläche angeordnet. Bei der Ansatzfläche kann es sich beispielsweise um einen unlösbar mit der Buchse verbundenen Dorn handeln, der von der Buchse absteht und für die Bedienungsperson einfach zu greifen ist. Aus Gründen der Platzersparnis ist als Ansatzfläche bevorzugt eine Vertiefung zum Eingriff eines Hilfswerkzeugs, zum Beispiel eine sechskantige Vertiefung für einen Inbusschlüssel, vorgesehen.

In einem bevorzugten Ausführungsbeispiel soll es der Bedienungsperson ermöglicht werden, die eingestellte Justierung, das heißt die Stellung der Buchse, zu fixieren. So kann beispielsweise mit einem ersten Werkzeughalter ein erster Bearbeitungsschritt durchgeführt werden, dieser erste Werkzeughalter anschließend von der Revolverscheibe gelöst werden um mit einem zweiten Werkzeughalter einen zweiten, anderen Bearbeitungsschritt oder die Bearbeitung eines anderen Werkstücks durchzuführen und anschließend mit dem ersten Werkzeughalter die erste Bearbeitung zu wiederholen, ohne dafür den Werkzeughalter wieder justieren zu müssen. Diese Fixierung erfolgt über eine Querbohrung, die in die Längsbohrung zur Aufnahme der Buchse mündet und einen Fixierstift, der bis auf Anschlag an die Buchse in die Querbohrung eingeführt wird und die Buchse so fixiert. Bevorzugt weist die Querbohrung ein Innengewinde auf und ist der Fixierstift in Form einer Klemmschraube ausgebildet.

Zur Verringerung der benötigten Fertigungsgenauigkeit der Buchse bzw. der Längsbohrung ist in einem weiteren Ausführungsbeispiel in der Längsbohrung eine Feder angeordnet, die die Buchse in Richtung der Revolverscheibe vorspannt. Dadurch ist der Justierstift immer vollständig in der Bohrung der Buchse aufgenommen und eine sichere Verbindung zwischen dem Justierstift und der Buchse garantiert.

In einem weiteren Ausführungsbeispiel ist die Justiervorrichtung nicht als separater Bauteil ausgeführt, sondern in den Körper des Werkzeughalters integriert. Der Werkzeughalter-Körper selbst weist hierbei eine Längsbohrung zur drehbaren Aufnahme der Buchse mit einer exzentrischen Bohrung auf. Diese Ausgestaltung reduziert die Anzahl der Bauteile und vereinfacht die Herstellung der Justiervorrichtung. Ist die Buchse derart in den Körper des Werkzeughalters eingebaut, daß ein Verdrehen der Buchse über eine Ansatzfläche an der von der Revolverscheibe abgewandten Seite der Buchse nicht möglich ist, so kann dies mittels eines Stellorgans und Stellmitteln erfolgen: Als Stellorgan kann beispielsweise ein Stellrad dienen, das größtenteils in einer Vertiefung des Werkzeughalter-Körpers angeordnet ist, wobei nur ein schmales Randsegment des Stellrads die Oberfläche des Werkzeughalter-Körpers überragt. Das Stellrad sowie die Buchse weisen jeweils an ihrer Oberfläche Zähne auf, die ineinander kämmen. Zur Justierung des Werkzeughalters dreht die Bedienungsperson mit ihren Fingern das Stellrad, wodurch die Drehbewegung direkt über die kämmenden Zähne auf die Buchse übertragen wird und eine Justierung des Instruments wie oben beschrieben erfolgt. Ist die Entfernung zwischen dem Stellorgan und der Buchse zu groß für einen direkten Kontakt, so erfolgt die Weiterleitung der Drehbewegung über Stellmittel, bevorzugt Wellen und / oder Zahnräder, die eine Wirkverbindung zwischen dem Stellorgan und der Buchse herstellen. Selbstverständlich kann auch eine separate Justiervorrichtung mit einem Stellorgan und Stellmitteln ausgestattet sein, um das Ausrichten des Werkzeugs auf das Werkstück für die Bedienungsperson noch komfortabler zu gestalten.

Um die Handhabung der Kupplungsvorrichtung und insbesondere das Zusammenfügen des Werkzeughalters mit den Justierstiften der Revolverscheibe für die Bedienungsperson zu erleichtern, werden in einem Ausführungsbeispiel die freien, von der Stirnfläche der Revolverscheibe wegweisenden Enden der Justierstifte und das von der Revolverscheibe wegweisende Ende der exzentrischen Bohrung oder die gesamte Bohrung konisch geformt.

Die Erfindung wird nachfolgend anhand eines bevorzugten Ausführungsbeispiels und Bezug nehmend auf die beigefügten Zeichnungen erläutert:
- Figur 1: zeigt einen Werkzeughalter einer CNC - Drehmaschine mit einer Justiervorrichtung gemäß dem Stand der Technik.
- Figur 2: zeigt eine Kupplungsvorrichtung einer CNC - Drehmaschine mit einer erfindungsgemäßen Justiervorrichtung.
- Figur 3: zeigt die erfindungsgemäße Justiervorrichtung in einem schwenkbaren Werkzeughalter.
- Figur 4: zeigt die erfindungsgemäße Justiervorrichtung.
- Figur 5: zeigt eine Rückansicht der Buchse der erfindungsgemäßen Justiervorrichtung.
In allen Figuren sind gleiche Bauteile mit den gleichen Ziffern beschriftet.

In Figur 2 ist eine Kupplungsvorrichtung 1 zur lösbaren Verbindung eines Werkzeughalters 100 mit dem Revolverkopf einer CNC - Drehmaschine, mit einer drehbar gelagerten Revolverscheibe 50, an der mehrere radial von der Stirnfläche 54 der Revolverscheibe 50 abstehende Justierstifte 52 angeordnet sind, und einem Werkzeughalter 100 mit einem Bolzen 107 (siehe Figur 1) zur Fixierung des Werkzeughalters 100 in einer der Bohrungen 51 in Umfangsnähe der Revolverscheibe 50 und mit einer erfindungsgemäßen Justiervorrichtung 2 zur Ausrichtung des Werkzeugs 109 auf das Werkstück 53 dargestellt. Die Justierung erfolgt durch Verdrehen einer zylindrischen Buchse 3, die in einer Längsbohrung 4 der Justiervorrichtung 2 drehbar gelagert ist.

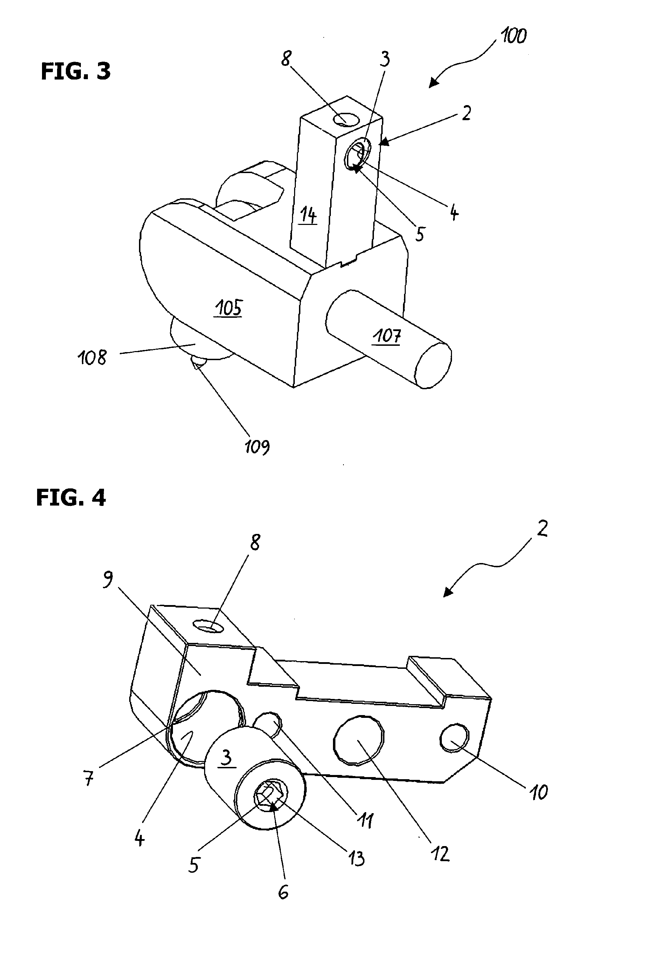

Die erfindungsgemäße Justiervorrichtung 2 ist in Figur 4 vergrößert abgebildet. Der besseren Übersichtlichkeit wegen ist die Buchse 3 außerhalb der Längsbohrung 4 dargestellt, wodurch eine Schulter 7 sichtbar ist, die sich an jenem Ende der Längsbohrung 4 befindet, das, wenn der Werkzeughalter 100 an der Revolverscheibe 50 befestigt ist, der Stirnfläche 54 der Revolverscheibe 50 zugewandt ist. Die Schulter 7 dient der Lagerung der Buchse 3 und verhindert ein Herausrutschen der Buchse 3 aus der Längsbohrung 4. In einem stufenförmigen Aufsatz 9 der Justiervorrichtung 2 ist eine Querbohrung 8 mit Innengewinde angeordnet, die in die Längsbohrung 4 mündet. Die Querbohrung 8 nimmt einer Klemmschraube auf, die bis auf Anschlag an die Buchse 3 in die Querbohrung 8 eingeschraubt wird und die Buchse 3 so in ihrer Position und somit die Justierung des Werkzeugs 109 fixiert. Dadurch kann der Werkzeughalter 100 mit der Justiervorrichtung 2 von der Revolverscheibe 50 gelöst und später daran wieder befestigt werden, ohne daß ein nochmaliger Justiervorgang durch die Bedienungsperson vorgenommen werden muß.

Die Bohrungen 10 und 11 dienen der Befestigung der Justiervorrichtung 2 am Körper 105 des Werkzeughalters 100 mittels Schrauben, deren Länge so gewählt ist, daß sie durch die Justiervorrichtung 2 hindurch in, an die Bohrungen 10, 11 anschließende, Innengewindebohrungen des Werkzeughalter-Körpers 105 ragen. Bohrung 12 schafft Raum zur Aufnahme eines weiteren Justierstifts 52, der bei Befestigung des Werkzeughalters 100 an der Revolverscheibe 50 durch die Justiervorrichtung 2 abgedeckt wird, für den Justiervorgang selbst aber keine Rolle spielt.

An der Buchse 3 ist eine Ansatzfläche 6 in Form einer Vertiefung mit einem sechskantigen Rand 13 zu erkennen, zum Eingriff eines Hilfswerkzeugs, zum Beispiel eines Inbusschlüssels, die das Verdrehen der Buchse 3 durch die Bedienungsperson erleichtert. An die Ansatzfläche 6 schließt die exzentrische Bohrung 5 zur Aufnahme eines Justierstifts 52 an.

Figur 3 zeigt einen Werkzeughalter 100, bei dem die Spannvorrichtung 108 gegenüber dem Werkzeughalter-Körper 105 schwenkbar ist. Die erfindungsgemäße Justiervorrichtung 2 ist in einem quaderförmigen Aufsatz 14 angeordnet ist, der mit seiner kleinsten Fläche dem Werkzeughalter-Körper 105 aufgesetzt und mit diesem verschraubt ist. Der Aufsatz 14 deckt bei diesem Ausführungsbeispiel keinen weiteren Justierstift 52 ab, wie dies bei der Justiervorrichtung 52 in Figur 2 der Fall ist, wodurch auch eine zusätzliche Bohrung 12 (siehe Figur 4) nicht notwendig ist.

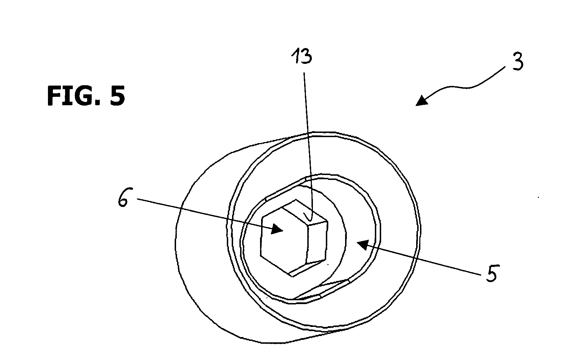

Figur 5 zeigt die Buchse 3 von jener Seite, die, wenn der Werkzeughalter 100 an der Revolverscheibe 50 befestigt ist, der Stirnfläche 54 der Revolverscheibe 50 zugewandt ist. Man erkennt, daß die exzentrische Bohrung 5 zur Aufnahme eines Justierstifts 52 als Langloch ausgebildet ist, um während des Justiervorgangs einen Längenausgleich des stationären Justierstifts in Bezug auf die bewegte Buchse 3 zu gewährleisten. An die Bohrung 5 schließt sich die Ansatzfläche 6 in Form einer Vertiefung mit einem sechskantigen Rand 13 an.

Die Erfindung ist nicht auf das beschriebene Ausführungsbeispiel beschränkt, sondern umfaßt alle Ausführungsmöglichkeiten, die das prinzipielle, sinngemäßen Funktionsprinzip der Erfindung nicht verändern. Insbesondere ist die Erfindung unabhängig von verschiedenen Arten von Revolverköpfen und Revolverscheiben und kann zum Beispiel auch an Sternrevolvern implementiert werden.

## Patentansprüche

1. Justiervorrichtung (2) für einen Werkzeughalter (100) einer CNC - Drehmaschine zur exakten Ausrichtung des im Werkzeughalter (100) eingespannten Werkzeugs (109) auf das zu bearbeitende Werkstück (53),
**gekennzeichnet durch**
eine Längsbohrung (4) in der eine Buchse (3) drehbar gelagert ist, wobei die Buchse (3) eine exzentrischer Bohrung (5) zur Aufnahme eines Justierstifts (52) der Revolverscheibe (50) aufweist.

2. Justiervorrichtung (2) nach Anspruch 1,
**dadurch gekennzeichnet, daß**
die exzentrische Bohrung (5) als Langloch ausgebildet ist.

3. Justiervorrichtung (2) nach einem der vorhergehenden Ansprüche,
**dadurch gekennzeichnet, daß**
die Buchse (3) an ihrer von der Revolverscheibe (50) abgewandten Seite eine Ansatzfläche (6) zum Drehen der Buchse (3), bevorzugt eine Vertiefung zum Eingriff eines Hilfswerkzeugs, besonders bevorzugt eine sechskantige Vertiefung (13) für einen Inbusschlüssel, aufweist.

4. Justiervorrichtung (2) nach einem der vorhergehenden Ansprüche,
**gekennzeichnet durch**
eine Querbohrung (8) zur Aufnahme eines Fixierstifts, die in die Längsbohrung (4) mündet.

5. Justiervorrichtung (2) nach Anspruch 4,
**dadurch gekennzeichnet, daß**
die Querbohrung (8) ein Innengewinde zur Aufnahme einer Klemmschraube aufweist.

6. Justiervorrichtung (2) nach einem der vorhergehenden Ansprüche,
**dadurch gekennzeichnet, daß**
in der Längsbohrung (4) eine Feder angeordnet ist, die die Buchse (3) in Richtung der Revolverscheibe (50) vorspannt.

7. Werkzeughalter (100) einer CNC - Drehmaschine mit einem Werkzeughalter-Körper (105),
**gekennzeichnet durch**
eine Längsbohrung im Werkzeughalter-Körper in der eine Buchse (3) drehbar gelagert ist, wobei die Buchse (3) eine exzentrischer Bohrung (5) zur Aufnahme eines Justierstifts (52) der Revolverscheibe (50) aufweist.

8. Justiervorrichtung (2) nach einem der Ansprüche 1, 2, 4 - 6 oder Werkzeughalter (100) nach Anspruch 7,
**gekennzeichnet durch**
ein Stellorgan, bevorzugt ein Stellrad, an der Justiervorrichtung (2) oder am Werkzeughalter-Körper (105), das direkt oder indirekt über ein oder mehrere Stellmittel, bevorzugt Wellen und / oder Zahnräder, mit der Buchse (3) in Wirkverbindung steht.

9. Kupplungsvorrichtung (1) einer CNC - Drehmaschine zur lösbaren Verbindung eines Werkzeughalters (100) mit einer Revolverscheibe (50) eines Revolverkopfs, an der mehrere radial von der Stirnfläche (54) der Revolverscheibe (50) abstehende Justierstifte (52) angeordnet sind, und einem Werkzeughalter (100) mit einer Justiervorrichtung (2) zur exakten Ausrichtung des im Werkzeughalter (100) eingespannten Werkzeugs (109),
**gekennzeichnet durch**
eine Justiervorrichtung (2) und / oder einen Werkzeughalter (100) nach einem der vorhergehenden Ansprüche, wobei zumindest das von der Revolverscheibe (50) wegweisende Ende der exzentrischen Bohrung (5) oder die gesamte Bohrung (5) sowie die freien Enden der Justierstifte (52) konisch geformt sind.
